# EUROPÄISCHE PATENTSCHRIFT

(11) **EP 0 692 439 B1**
(45) Veröffentlichungstag und Bekanntmachung des Hinweises auf die Patenterteilung: **20.05.1998**
(21) Anmeldenummer: 95250169.0
(22) Anmeldetag: 12.07.1995
(51) Int. Cl.: B65G 1/04

(54) **Verfahren und Einrichtung zum Entsorgen von Leerpaletten aus einem Regallager**
Method of and installation for removing empty pallets out of a shelf store
Procédé et installation pour l'enlèvement de palettes vides hors d'un magasin à rayonnage

(30) Priorität: 14.07.1994 DE 4425780
(43) Veröffentlichungstag der Anmeldung: 17.01.1996
(73) Patentinhaber: MANNESMANN Aktiengesellschaft, 40213 Düsseldorf (DE)
(72) Erfinder: Dahms, Klaus-Peter, D-45665 Recklinghausen (DE)
(74) Vertreter: Presting, Hans-Joachim, Dipl.-Ing.

(56) Entgegenhaltungen:
- WO-A-94/02390
- DE-A- 3 909 415
- DE-C- 4 224 597
- GB-A- 1 414 022
- US-A- 3 661 280
- PATENT ABSTRACTS OF JAPAN vol. 18 no. 589 (M-1701) ,10.November 1994 & JP-A-06 219511 (DAIFUKU) 9.August 1994,

## Beschreibung

Die Erfindung betrifft ein Verfahren und eine Einrichtung zum Entsorgen von Leerpaletten aus einem Regallager mit einem im Regalgang verfahrbaren Regalbediengerät, das einen Hubwagen mit zumindest einer Ausfahreinrichtung aufweist, wobei eine Kommissionierpalette von einem Kommissioniergang aus manuell bedienbar ist.

Es ist bekannt, Leerpaletten mittels eines Förderfahrzeuges zwischenzulagern (DE 42 24 597 C1), wobei eine an einem Mast vertikal geführte und angetriebene Hubgabel zur Aufnahme bzw. Abgabe der Paletten vorgesehen ist. Die bekannte Lösung strebt an, mit konstruktiv einfachen Mitteln eine betriebssichere Zwischenlagerung von Paletten mit einem Förderfahrzeug zu ermöglichen und schlägt vor, daß das Zwischenlager als an sich bekannte Stapelvorrichtung zum Abgeben bzw. Führen der Paletten von unten in einen Stapel ausgeführt ist, die Stapelvorrichtung an dem Mast und oberhalb der abgesenkten Hubgabel angeordnet ist und mehrere Haltearme aufweist, die von einer Offenstellung in eine Verriegelungsstellung verschwenkbar sind, in der die Haltearme die unterste Palette des Stapels abstützen und der Abstand der Haltearme von der abgesenkten Hubgabel so gewählt ist, daß von der Hubgabel mindestens eine Palette der Stapeleinrichtung zuführbar bzw. von dieser übernehmbar ist.

Abgesehen von der bekannten Entsorgung der Leerpaletten durch Gabelstapler ist auch möglich, wenn auch umständlich, die Paletten durch das Kommissionierpersonal per Hand zu entsorgen.

Der vorliegenden Erfindung liegt die Aufgabe zugrunde, das Kommissionierpersonal weitestgehend zu entlasten und gleichzeitig auf den bekannten Gabelstapler völlig zu verzichten.

Die gestellte Aufgabe wird auf der Basis des eingangs bezeichneten Verfahrens erfindungsgemäß dadurch gelöst, daß bei in gleichen Ebenen oder in übereinanderliegenden Ebenen angeordneten Auflagen für die Kommissionier- und eine Nachschubpalette nach jeweiligem Entfernen des Transportguts eine Leerpalette, d.h. eine geleerte Kommissionierpalette unter die Nachschubpalette bzw. unter der Nachschubpalette hindurchbewegt wird, daß die Leerpalette im Regalgang durch eine Aushubvorrichtung angehoben wird und daß dann die Nachschubpalette in den Bereich des Kommissioniergangs transportiert wird. Ein solcher Zyklus erspart Zeit und erhöht die Leistungsfähigkeit des Regalbediengeräts. Außerdem ist eine weitestgehende Automatisierung und damit Entlastung des Kommissionierpersonals möglich.

Die Erfindung ist in mehreren Varianten einsetzbar. So ist nach einer ersten Variante vorgesehen, daß bei gestuften Ebenen die Auflage für die Nachschubpalette höher angeordnet ist als die Auflage für die Kommissionierpalette und daß eine doppelt tief ausfahrbare Ausfahreinrichtung vom Regalgang aus quer zum Regalgang bis in den Bereich des Kommissionierganges ausgefahren oder von dort zurückgefahren wird. Eine solche Verfahrensweise erfordert lediglich die Anbringung von gestuften Ebenen für die Auflage.

Nach einer zweiten Variante wird vorgeschlagen, daß bei gleicher, horizontaler Ebene der Auflagen für die Kommissionier- und die Nachschubpalette mit zwei nebeneinanderliegenden Ausfahreinrichtungen gearbeitet wird. Die beiden Ausfahreinrichtungen befinden sich auf dem Hubwagen, und die Aushubeinrichtung arbeitet mit Stapelfunktion, so daß der Leerpalettenstapel auf dem Gerät gebildet werden kann. Hiermit ist eine Leistungssteigerung des Regalbediengerätes durch entfallende Leerfahrten zum Auslagerpunkt bzw. Leerpalettenstapler im Regal verbunden.

Eine dritte Variante sieht vor, daß bei gleich hoher, horizontaler Ebene der Auflagen für die Kommissionier- und die Nachschubpalette mit zwei übereinander angeordneten, doppelt tief ausfahrbaren Ausfahreinrichtungen gearbeitet wird. Diese Alternative könnte auch mit nebeneinanderliegenden Ausfahreinrichtungen auf dem Regalbediengerät, mit einer Leerpalettengabel mit Stapeleinrichtung kombiniert durchgeführt werden (vierte Variante).

Gemäß einer fünften Variante wird vorgeschlagen, daß bei übereinander angeordneten gegenläufig schiefen Ebenen der Auflagen für Kommissionierund Nachschubpaletten die Bewegung der Leerpaletten aufgrund Schwerkraft erzeugt wird. Hierbei genügt z.B. die Ausrüstung des Regalbediengeräts mit einer einfach tief ausfahrbaren Ausfahreinrichtung.

Jeweils wird mit den fünf vorstehend beschriebenen Varianten der Vorteil erreicht, daß eine Automatisierung der Entsorgung der anfallenden Leerpaletten erfolgt.

Die Einrichtung zum Entsorgen von Leerpaletten aus einem Regallager mit einem im Regalgang verfahrbaren Regalbediengerät, das einen Hubwagen mit zumindest einer Ausfahreinrichtung aufweist, wobei eine Kommissionierpalette von einem Kommissioniergang aus manuell bedienbar ist, ist vorteilhafterweise dahingehend gestaltet, daß zwischen Kommissioniergang und Regalgang in einer Ebene oder in übereinander angeordneten Ebenen Auflagen für die Kommissionierpalette und die Nachschubpalette angeordnet sind und daß im Regalgang ein Regalbediengerät verfahrbar ist, an dem zumindest eine einfach oder eine doppelt tief ausfahrbare Ausfahreinrichtung vorgesehen ist. Vorrichtungstechnisch ist daher zur Durchführung des erfindungsgemäßen Verfahrens lediglich erforderlich, die Auflagen und eine entsprechend gestaltete Ausfahreinrichtung nachzurüsten.

Nach weiteren Merkmalen wird vorgeschlagen, daß zwei Ausfahreinrichtungen vorgesehen sind, die entweder nebeneinander oder übereinander am Regalbediengerät angeordnet sind. Derartige Ausfahreinrichtungen können daher nachträglich noch auf dem Hubtisch angeordnet werden.

Vorrichtungstechnisch ist ferner für die Durchführung des Verfahrens vorteilhaft, daß bei übereinander angeordneten Ebenen für die Auflagen der Nachschubpalette und der Kommissionierpalette die Ebenen jeweils gegenläufig schräg verlaufen, so daß eine Leerpalette durch Schwerkraft in Richtung auf das Stollenlager oder in Richtung auf den Regalgang bzw. das Regalbediengerät antreibbar sind. Hier kann auch wegen der geringen Gewichte bzw. Massen eine geringfügige manuelle Arbeit geleistet werden.

Diese manuelle Arbeit ergibt sich z.B. dadurch, daß auf der Ebene des Kommissioniergangs ein fluchtend in die Richtungen der schrägverlaufenden Ebenen für die Kommissionierpalette bzw. Nachschubpalette schwenkbares Rollenbahn-Endsegment angeordnet ist.

Ausführungsbeispiele der Erfindung sind in der Zeichnung dargestellt und werden im folgenden näher beschrieben.

Es zeigen
die Fig. 1 bis 7 die Verfahrensvariante I in sechs Schritten,
die Fig. 8 bis 11 die Verfahrensvariante III in drei Schritten und
die Fig. 12 und 13 die Verfahrensvariante V.

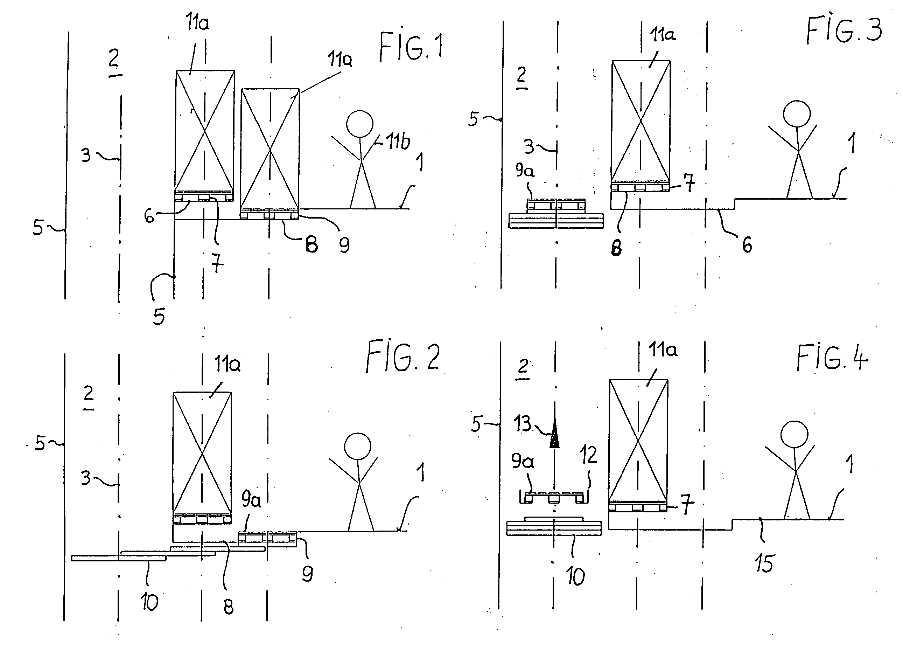

Benachbart zu einem Kommissioniergang 1 ist ein Regalgang 2 für ein Regalbediengerät 3 vorgesehen, der beidseitig durch auf Stehern 4 gestützten Vorratsfächern 5 begrenzt ist. An den Regalstehern 4 sind mit Winkeln befestigte Auflagen 6 für eine Nachschubpalette 7 und eine mit Winkeln befestigte Auflage 8 für eine Kommissionierpalette 9 angeordnet. Das Regalbediengerät 3 besitzt eine jeweils in Richtung auf die beidseitigen Vorratsfächer 5 doppelt tief ausfahrbare Ausfahreinrichtung 10, und neben der Kommissionierpalette 9 verläuft der Kommissioniergang 1. Die Kommissionierpalette 9 steht (Fig. 2) entleert zur Abholung durch das Regalbediengerät 3 bereit. Die Ausfahreinrichtung 10, die z.B. als ein Teleskoptisch ausgestaltet sein kann, unterfährt die vom Transportgut 11a durch das Kommissionierpersonal 11b geleerte Kommissionierpalette 9 und übernimmt diese.

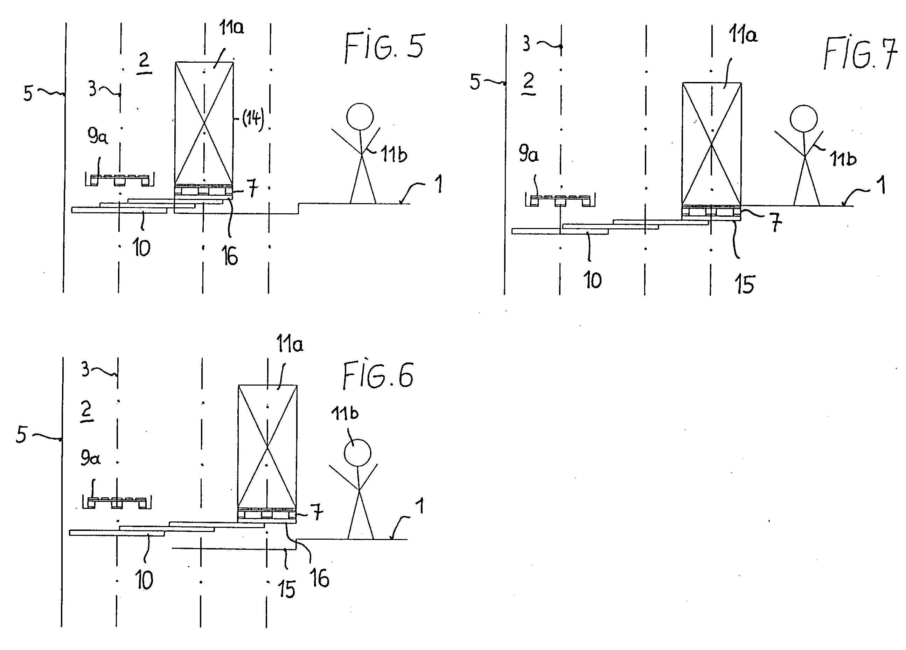

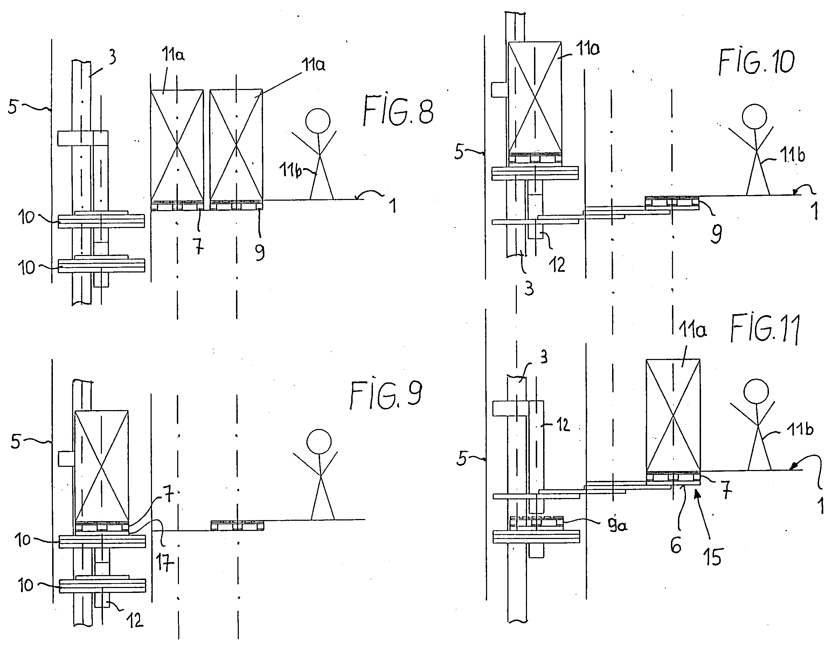

Hierbei wird (Fig. 3) die Kommissionierpalette 9 nunmehr als Leerpalette 9a unter der Nachschubpalette 7 hindurch auf einen Hubwagen 12 des Regalbediengerätes 3 hinaufgezogen. Im nächsten Schritt (Fig. 4) hebt eine Aushubvorrichtung 13 diese Leerpalette 9a von der Ausfahreinrichtung 10 ab, so daß die Ausfahreinrichtung 10 nicht mehr belegt ist. Danach hebt die Ausfahreinrichtung 10 die Nachschubpalette 7 von einem Nachschubfach 14 frei (Fig. 5). Anschließend fährt die Ausfahreinrichtung 10 doppelt tief aus (Fig. 6), und die Nachschubpalette 7 wird auf einem Kommissionierplatz 15 abgesetzt (Fig. 7). Letztendlich wird das Verfahren durch einen weiteren Schritt abgeschlossen, indem das Regalbediengerät 3 einen (beliebigen) Auslagerpunkt anfährt und die Leerpalette 9a an eine Fördervorrichtung abgibt oder an eine Leerplattenstapeleinrichtung im Regal.

Das Regalbediengerät 3 kann alternativ auch mit zwei nebeneinanderliegenden Ausfahreinrichtungen 10 auf dem Hubwagen 12 ausgerüstet werden, mit einer Aushubvorrichtung 13, die eine Stapelfunktion besitzt, so daß ein Leerpalettenstapel auf dem Regalbediengerät 3 gebildet werden kann. Hiermit ist eine Leistungssteigerung des Regalbediengeräts durch entfallende Leerfahrten zum Auslagerpunkt bzw. dem Leerpalettenstapler in einem Regal verbunden.

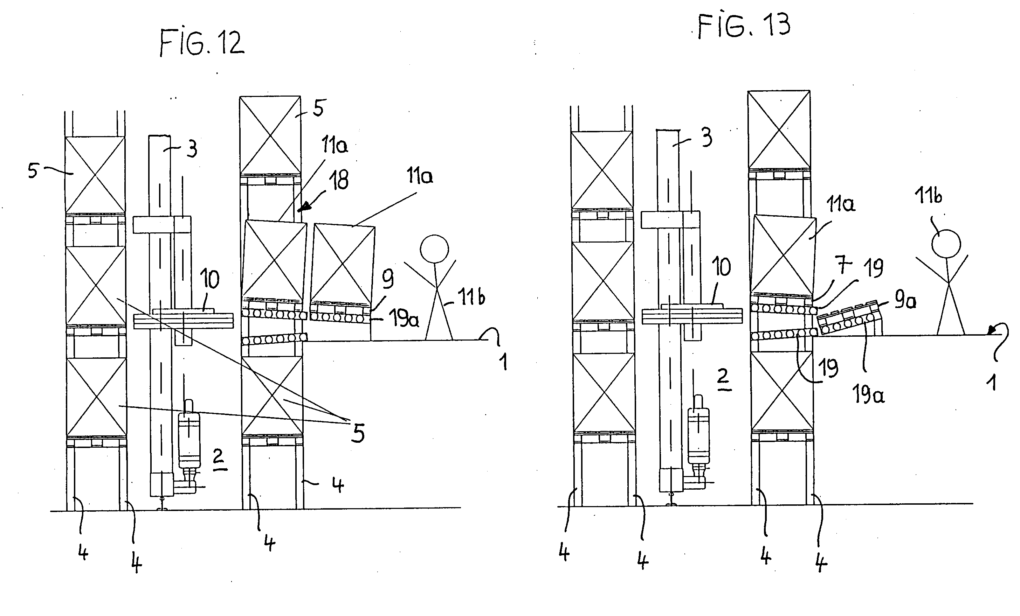

Eine alternative Ausführungsform sieht ein Regalbediengerät 3 mit zwei übereinander angeordneten, doppelt tief ausfahrbaren Ausfahreinrichtungen 10 vor bei gleicher Ablagenhöhe der Nachschubpalette 7 und der Kommissionierpalette 9 (Fig. 8). Hierbei werden folgende Schritte ausgeführt:
- eine Hauptgabel 17 nimmt die Nachschubpalette 7 einfach tief auf (Fig. 9),
- der Hubwagen 12 fährt in eine Übernahmeposition "Leerpalettengabel" und die "Leerpalettengabel" nimmt die entleerte Kommissionierpalette 9 auf (Fig. 10),
- der Hubwagen 12 senkt auf die Position "Hauptgabel" ab und gibt die Nachschubpalette 7 an die Auflage 6 des Kommissionierplatzes 15 ab (Fig. 11).

Es ist auch eine Einrichtung mit nebeneinanderliegenden Ausfahreinrichtungen 10 auf dem Regalbediengerät 3 alternativ möglich, wobei die Leerpalettengabel mit einer Stapeleinrichtung kombiniert ist.

Eine dritte alternative Ausführungsform (Fig. 12 und 13) setzt eine Ausrüstung des Regalbediengeräts 3 mit einer einfachen tief ausfahrbaren Ausfahreinrichtung 10 voraus. Die Lagerung von Nachschubpaletten 7 und Kommissionierpaletten 9 erfolgt in Durchlaufkanälen 18 mit Rollenbahnsegmenten 19, an deren Ende ein schwenkbares Rollenbahn-Endsegment 19a angeordnet ist. Nach Entleerung der Kommissionierpalette 9 durch die Kommissionierperson 11b wird über eine Mechanik das Rollenbahn-Endsegment 19a des Durchlaufkanals 18 mit einer Leerpalette 9a in die entgegengesetzte Gefälle-Richtung geschwenkt (Fig. 13), so daß die Leerpalette 9a quer zur Richtung des Regalgangs 2 läuft und somit dem Regalbediengerät 3 für eine Entnahme zur Verfügung gestellt wird.

## Patentansprüche

1. Verfahren zum Entsorgen von Leerpaletten (9a) aus einem Regallager mit einem im Regalgang (2) verfahrbaren Regalbediengerät (3), das einen Hubwagen (12) mit einer Ausfahreinrichtung (10) aufweist, wobei eine Kommissionierpalette (9) von einem Kommissioniergang (1) aus manuell bedienbar ist,
dadurch gekennzeichnet,
daß, bei in gleichen Ebenen oder in übereinanderliegenden Ebenen angeordneten Auflagen (8;6) für die Kommissionier- (9) und eine Nachschubpalette (7), nach jeweiligem Entfernen des Transportguts eine Leerpalette 9a), d.h. eine geleerte Kommissionierpalette, unter die Nachschubpalette bzw. unter der Nachschubpalette hindurchbewegt wird, daß die Leerpalette im Regalgang durch eine Aushubvorrichtung (13) angehoben wird und daß dann die Nachschubpalette in den Bereich des Kommissioniergangs transportiert wird.

2. Verfahren nach Anspruch 1,
dadurch gekennzeichnet,
daß bei gestuften Ebenen die Auflage für die Nachschubpalette höher angeordnet ist als die Auflage für die Kommissionierpalette und daß eine doppelt tief ausfahrbare Ausfahreinrichtung vom Regalgang aus quer zum Regalgang bis in den Bereich des Kommissionierganges ausgefahren oder von dort zurückgefahren wird.

3. Verfahren nach einem der Ansprüche 1 oder 2,
dadurch gekennzeichnet,
daß bei gleicher, horizontaler Ebene der Auflagen für die Kommissionier- und die Nachschubpalette mit zwei nebeneinanderliegenden Ausfahreinrichtungen gearbeitet wird.

4. Verfahren nach Anspruch 1,
dadurch gekennzeichnet,
daß bei gleich hoher, horizontaler Ebene der Auflagen für die Kommissionier- und die Nachschubpalette mit zwei übereinander angeordneten, doppelt tief ausfahrbaren Ausfahreinrichtungen gearbeitet wird.

5. Verfahren nach Anspruch 1,
dadurch gekennzeichnet,
daß bei übereinander angeordneten gegenläufig schiefen Ebenen der Auflagen für Kommissionier- und Nachschubpaletten die Bewegung der Leerpaletten aufgrund Schwerkraft erzeugt wird.

6. Einrichtung zum Entsorgen von Leerpaletten (9a) aus einem Regallager mit einem im Regalgang (2) verfahrbaren Regalbediengerät (3), das einen Hubwagen (12) mit zumindest einer Ausfahreinrichtung (10) aufweist, wobei eine Kommissionierpalette (9) und eine Nachschubpalette (7) von einem Kommissioniergang (1) aus manuell bedienbar sind,
dadurch gekennzeichnet,
daß zwischen Kommissioniergang (1) und Regalgang (2) in einer Ebene oder in übereinander angeordneten Ebenen Auflagen (8; ) für die Kommissionierpalette (9) und die Nachschubpalette (7) angeordnet sind und daß im Regalgang (2) ein Regalbediengerät (3) verfahrbar ist, an dem zumindest eine einfach oder eine doppelt tief ausfahrbare Ausfahreinrichtung (10) vorgesehen ist, die eine Leerpalette (9a) unter die bzw. unter der Nachschubpalette (7) durch bewegen kann.

7. Einrichtung nach Anspruch 6,
dadurch gekennzeichnet,
daß zwei Ausfahreinrichtungen (10) vorgesehen sind, die entweder nebeneinander oder übereinander am Regalbediengerät (3) angeordnet sind.

8. Einrichtung nach einem der Ansprüche 6 oder 7,
dadurch gekennzeichnet,
daß bei übereinander angeordneten Ebenen für die Auflagen (6) der Nachschubpalette (7) und der Kommissionierpalette (9) die Ebenen jeweils gegenläufig schräg verlaufen, so daß eine Leerpalette (9a) durch Schwerkraft in Richtung auf das Stollenlager (1) oder in Richtung auf den Regalgang (2) bzw. das Regalbediengerät (3) antreibbar sind.

9. Einrichtung nach Anspruch 8,
dadurch gekennzeichnet,
daß auf der Ebene des Stollenlagers (1) ein fluchtend in die Richtungen der schrägverlaufenden Ebenen für die Kommissionierpalette (9) bzw. Nachschubpalette (7) schwenkbares Rollenbahn-Endsegment (19a) angeordnet ist.

## Claims

1. A method for removing empty pallets (9a) from a shelf store using a rack servicing unit (3) which can be moved in the racking aisle (2), which unit has an elevating-platform truck (12) with an extension means (10), an order-picking pallet (9) being able to be operated manually from an order-picking aisle (1), characterised in that with support surfaces (8; 6) for the order-picking pallet (9) and a replacement pallet (7) arranged in the same planes or in superposed planes, after the respective removal of the material being transported an empty pallet (9a), that is to say an emptied order-picking pallet, is moved through beneath the replacement pallet or under the replacement pallet, that the empty pallet in the racking aisle is raised by a lifting-out device (13) and that the replacement pallet is then transported into the region of the order-picking aisle.

2. A method according to Claim 1, characterised in that with stepped planes the support surface for the replacement pallet is arranged higher than the support surface for the order-picking pallet, and that an extension means which can be extended twice as deep is extended from the racking aisle transversely to the racking aisle into the region of the order-picking aisle or is retracted therefrom.

3. A method according to one of Claims 1 or 2, characterised in that with the same horizontal plane of the support surfaces for the order-picking pallet and the replacement pallet two adjacent extension devices are used.

4. A method according to Claim 1, characterised in that with the same horizontal plane of the support surfaces for the order-picking pallet and the replacement pallet two overlying extension devices which can be extended twice as deep are used.

5. A method according to Claim 1, characterised in that with planes for the support surfaces for order-picking pallets and replacement pallets which are inclined in opposite directions and overlie one another, the movement of the empty pallets is produced on the basis of gravity.

6. An apparatus for removing empty pallets (9a) from a shelf store with a rack servicing unit (3) which can be moved in the racking aisle (2), which unit has an elevating-platform truck (12) with at least one extension means (10), an order-picking pallet (9) and a replacement pallet (7) being able to be operated manually from an order-picking aisle (1), characterised in that support surfaces (8) for the order-picking pallet (9) and the replacement pallet (7) are arranged between the order-picking aisle (1) and racking aisle (2) in one plane or in planes overlying one another, and that a rack servicing unit (3) can be moved in the racking aisle (2), on which at least one extension means (10) which can be extended in a single depth or a double depth is provided, which means can move an empty pallet (9a) through beneath or under the replacement pallet (7).

7. An apparatus according to Claim 6, characterised in that two extension means (10) are provided, which are arranged on the rack servicing unit (3) either adjacent to one another or one above the other.

8. An apparatus according to one of Claims 6 or 7, characterised in that with planes for the support surfaces (6) for the replacement pallet (7) and the order-picking pallet (9) which are arranged one above the other the planes each extend inclined in opposite directions, so that an empty pallet (9a) can be driven by gravity towards the working store (1) or towards the racking aisle (2) or the rack servicing unit (3).

9. An apparatus according to Claim 8, characterised in that a roller-conveyor end segment (19a) which can be pivoted flush into the directions of the inclined planes for the order-picking pallet (9) or replacement pallet (7) is arranged on the plane of the working store (1).

## Revendications

1. Procédé pour évacuer des palettes vides (9a) de rayonnages, comportant un appareil de service des rayonnages (3) déplaçable dans une travée de rayonnages (2), qui présente un chariot de levage (12) ayant un dispositif de sortie (10), une palette pour rassembler et préparer des marchandises pour l'expédition (9) pouvant être manoeuvrée manuellement à partir d'une travée (1) de rassemblement et de préparation des marchandises,
caractérisé en ce que, pour des tablettes (8;6) agencées dans des mêmes plans ou dans des plans superposés pour la palette pour rassembler et préparer des marchandises (9) et une palette d'approvisionnement (7), après l'éloignement respectif de la matière transportée, une palette vide (9a), c'est-à-dire une palette pour rassembler et préparer des marchandises vidée, est déplacée sous la palette d'approvisionnement, en ce que la palette vide est soulevée, dans la travée de rayonnages, par un dispositif de levage (13), et en ce que, ensuite, la palette d'approvisionnement est transportée dans la zone de la travée de rassemblement et de préparation des marchandises.

2. Procédé selon la revendication 1,
caractérisé en ce que, dans le cas de plans étagés, la tablette pour la palette d'approvisionnement est agencée de façon plus élevée que la tablette pour la palette de rassemblement et de préparation des marchandises, et en ce qu'un dispositif de sortie pouvant être sorti à une profondeur double est sorti à partir de la travée de rayonnages, transversalement à la travée de rayonnages, jusque dans la zone de la travée de rassemblement et de préparation des marchandises ou est ramené de là.

3. Procédé selon une des revendications 1 ou 2,
caractérisé en ce que, dans le cas d'un même plan horizontal des tablettes pour la palette de rassemblement et de préparation des marchandises et la palette d'approvisionnement, on travaille avec deux dispositifs de sortie se trouvant l'un à côté de l'autre.

4. Procédé selon la revendication 1,
caractérisé en ce que, dans le cas d'un plan horizontal de même hauteur des tablettes pour la palette de rassemblement et de préparation des marchandises et la palette d'approvisionnement, on travaille avec deux dispositifs de sortie pouvant être sortis à une profondeur double, agencés l'un au-dessus de l'autre.

5. Procédé selon la revendication 1,
caractérisé en ce que, dans le cas de plans, agencés l'un au-dessus de l'autre, d'inclinaisons opposées, des tablettes pour la palette de rassemblement et de préparation des marchandises et pour la palette d'approvisionnement, le mouvement des palettes vides est engendré par gravité.

6. Dispositif pour évacuer des palettes vides (9a) de rayonnages, comportant un appareil de service des rayonnages (3) déplaçable dans la travée de rayonnages (2), qui présente un chariot de levage (12) ayant au moins un dispositif de sortie (10), une palette de rassemblement et de préparation des marchandises (9) et une palette d'approvisionnement (7) pouvant être manoeuvrés manuellement à partir d'une travée de rassemblement et de préparation des marchandises (1),
caractérisé en ce que, entre la travée de rassemblement et de préparation des marchandises (1) et la travée de rayonnages (2), sont agencées, dans un plan ou dans des plans agencés l'un au-dessus de l'autre, des tablettes (8;6) pour la palette de rassemblement et de préparation des marchandises (9) et la palette d'approvisionnement (7), et en ce que, dans la travée de rayonnages (2), un appareil de service des rayonnages (3) peut être déplacé, sur lequel il est prévu au moins un dispositif de sortie (10), pouvant être sorti à une simple ou double profondeur, qui peut déplacer une palette vide (9a) sous la palette d'approvisionnement (7).

7. Dispositif selon la revendication 6,
caractérisé en ce que deux dispositifs de sortie (10) sont prévus, qui sont agencés soit l'un à côté de l'autre ou l'un au-dessus de l'autre sur l'appareil de service des rayonnages (3).

8. Dispositif selon une des revendications 6 ou 7,
caractérisé en ce que, dans le cas de plans agencés l'un au-dessus de l'autre pour les tablettes (6) de la palette d'approvisionnement (7) et de la palette de rassemblement et de préparation des marchandises (9), les plans s'étendent à chaque fois de façon inclinée opposée, de sorte qu'une palette vide (9a) peut être entraînée par gravité en direction de la travée de rassemblement et de préparation des marchandises (1) ou en direction de la travée des rayonnages (2) ou de l'appareil de service des rayonnages (3).

9. Dispositif selon la revendication 8,
caractérisé en ce que, sur le plan de la travée de rassemblement et de préparation des marchandises (1), il est agencé un segment d'extrémité (19a) de transporteur à rouleaux pouvant pivoter de façon alignée dans les directions des plans s'étendant de façon inclinée pour la palette de rassemblement et de préparation des marchandises (9) ou la palette d'approvisionnement (7).
